# EUROPEAN PATENT SPECIFICATION

(11) **EP 3 275 965 B1**
(45) Date of publication and mention of the grant of the patent: **25.12.2019**
(21) Application number: 17188278.0
(22) Date of filing: 03.03.2006
(51) Int. Cl.: C09K 5/04, C10M 171/00

(54) **COMPOSITIONS COMPRISING A FLUOROOLEFIN**
ZUSAMMENSETZUNGEN MIT EINEM FLUOROLEFIN
COMPOSITIONS COMPORTANT UNE FLUOROLÉFINE

(30) Priority: 04.03.2005 US 658543 P; 23.08.2005 US 710439 P; 01.11.2005 US 732769 P
(43) Date of publication of application: 31.01.2018
(62) Divisional of application: 08014611.1
(73) Proprietor: The Chemours Company FC, LLC, Wilmington DE 19801 (US)
(72) Inventor: Rao, Velliyur Nott Mallikarjuna, deceased (US); Minor, Barbara Haviland, Elkton, MD 21921 (US)
(74) Representative: Dannenberger, Oliver Andre

(56) References cited:
- WO-A1-2005/108523
- US-A1- 2004 089 839
- US-A1- 2004 256 594
- DATABASE WPI Week 199221 Thomson Scientific, London, GB; AN 1992-172539 XP002691474, & JP 4 110388 A (DAIKIN KOGYO KK) 10 April 1992 (1992-04-10)

## Description

### CROSS REFERENCE(S) TO RELATED APPLICATION(S)

This application claims the priority benefit of U.S. Provisional Application 60/658,543, filed March 4, 2005, and U.S. Provisional Application 60/710,439, filed August 23, 2005, and U.S. Provisional Application 60/732,769, filed November 1, 2005.

### BACKGROUND OF THE INVENTION

### 1. Field of the Invention.

The present invention relates to compositions for use in refrigeration, air-conditioning, and heat pump systems wherein the composition comprises a fluoroolefin and at least one other component. The compositions of the present invention are useful in processes for producing cooling or heat, and as heat transfer fluids. 2. Description of Related Art.

The refrigeration industry has been working for the past few decades to find replacement refrigerants for the ozone depleting chlorofluorocarbons (CFCs) and hydrochlorofluorocarbons (HCFCs) being phased out as a result of the Montreal Protocol. The solution for most refrigerant producers has been the commercialization of hydrofluorocarbon (HFC) refrigerants. The new HFC refrigerants, HFC-134a being the most widely used at this time, have zero ozone depletion potential and thus are not affected by the current regulatory phase out as a result of the Montreal Protocol.

Further environmental regulations may ultimately cause global phase out of certain HFC refrigerants. Currently, the automobile industry is facing regulations relating to global warming potential for refrigerants used in mobile air-conditioning. Therefore, there is a great current need to identify new refrigerants with reduced global warming potential for the mobile air-conditioning market. Should the regulations be more broadly applied in the future, an even greater need will be felt for refrigerants that can be used in all areas of the refrigeration and air-conditioning industry.

Currently proposed replacement refrigerants for HFC-134a include HFC-152a, pure hydrocarbons such as butane or propane, or "natural" refrigerants such as CO₂. Many of these suggested replacements are toxic, flammable, and/or have low energy efficiency. Therefore, new alternative refrigerants are being sought.

US 2004/089839 A1 describes fluorinated alkene refrigerant compositions comprising HFC-1234yf.

US 2004/0256594 A1 discloses the use of tetrafluoropropenes in a variety of applications, including refrigeration equipment.

JP 4 110388 A discloses heat transfer fluids comprising an organic compound based on propene substituted by 1-5 fluorine atoms. These compounds can be mixed with hydrofluorocarbons.

The object of the present invention is to provide novel refrigerant compositions and heat transfer fluid compositions that provide unique characteristics to meet the demands of low or zero ozone depletion potential and lower global warming potential as compared to current refrigerants.

### BRIEF SUMMARY OF THE INVENTION

The present invention relates to a composition comprising a lubricant, HFC-1234yf and HFC-134a; a lubricant, HFC-1234yf and HFC-152a; a lubricant, HFC-1234yf and HFC-32; a lubricant, HFC-1234yf, HFC-32 and HFC-125; a lubricant, HFC-1234yf, HFC-32 and HFC-143a; or a lubricant, HFC-1234yf, HFC-125 and HFC-143a; wherein the lubricant is selected from the group consisting of polyol esters and polyvinyl ethers.

The present invention further relates to a composition as defined in claims 2 to 7, to a method as defined in claims 8 to 10, and to a refrigeration apparatus, air-conditioning apparatus or heat pump apparatus as defined in claim 11.

### DETAILED DESCRIPTION OF THE INVENTION

The present invention relates to compositions comprising a lubricant, HFC-1234yf and HFC-134a; a lubricant, HFC-1234yf and HFC-152a; a lubricant, HFC-1234yf and HFC-32; a lubricant, HFC-1234yf, HFC-32 and HFC-125; a lubricant, HFC-1234yf, HFC-32 and HFC-143a; or a lubricant, HFC-1234yf, HFC-125 and HFC-143a; wherein the lubricant is selected from the group consisting of polyol esters and polyvinyl ethers.

Fluoroolefin compounds and other compounds are listed in Table 1.

**TABLE 1**

| **Compound** | **Chemical name** | **Chemical formula** |
|---|---|---|
| HFC-1225ye | 1,2,3,3,3-pentafluoropropene | CF₃CF=CHF |
| HFC-1234ze | 1,3,3,3-tetrafluoropropene | CF₃CH=CHF |
| HFC-1234yf | 2,3,3,3-tetrafluoropropene | CF₃CF=CH₂ |
| HFC-1234ye | 1,2,3,3-tetrafluoropropene | CHF₂CF=CHF |
| HFC-1243zf | 3,3,3-trifluoropropene | CF₃CH=CH₂ |
| HFC-32 | difluoromethane | CH₂F₂ |
| HFC-125 | pentafluoroethane | CF₃CHF₂ |
| HFC-134 | 1,1,2,2-tetrafluoroethane | CHF₂CHF₂ |
| HFC-134a | 1,1,1,2-tetrafluoroethane | CH₂FCF₃ |
| HFC-143a | 1,1,1-trifluoroethane | CH₃CF₃ |
| HFC-152a | 1,1-difluoroethane | CHF₂CH₃ |
| HFC-161 | fluoroethane | CH₃CH₂F |
| HFC-227ea | 1,1,1,2,3,3,3-heptafluoropropane | CF₃CHFCF₃ |
| HFC-236ea | 1,1,1,2,3,3-hexafluoropropane | CF₃CHFCHF₂ |
| HFC-236fa | 1,1,1,3,3,3-hexafluoroethane | CF₃CH₂CF₃ |
| HFC-245fa | 1,1,1,3,3-pentafluoropropane | CF₃CH₂CHF₂ |
| HFC-365mfc | 1,1,1,3,3-pentafluorobutane | CF₃CH₂CH₂CHF₂ |
| | propane | CH₃CH₂CH₃ |
| | n-butane | CH₃CH₂CH₂CH₃ |
| i-butane | isobutane | CH₃CH(CH₃)CH₃ |
| | 2-methylbutane | CH₃CH(CH₃)CH₂CH₃ |
| | n-pentane | CH₃CH₂CH₂CH₂CH₃ |
| | cyclopentane | cyclo-(CH₂)₅- |
| DME | dimethylether | CH₃OCH₃ |
| CO₂ | carbon dioxide | CO₂ |
| CF₃SCF₃ | bis(trifluoromethyl)sulfide | CF₃SCF₃ |
| | iodotrifluoromethane | CF₃l |

The individual components listed in Table 1 may be prepared by methods known in the art.

The compositions of the present invention may be generally useful when the fluoroolefin is present at 1 weight percent to 99 weight percent, preferably 20 weight percent to 99 weight percent, more preferably 40 weight percent to 99 weight percent and still more preferably 50 weight percent to 99 weight percent.

The present invention further provides compositions comprising a lubricant as defined above and the components as listed in Table 2.

**TABLE 2**

| **Components** | **Concentration ranges (wt%)** | | |
|---|---|---|---|
| | **Preferred** | **More preferred** | **Most preferred** |
| HFC-1234yf/HFC-134a | 1-99/99-1 | 30-99/70-1 | 90/10 |
| HFC-1234yf/HFC-32 | 1-99/99-1 | 40-99/60-1 | 95/5 |
| HFC-1234yf/HFC-152a | 1-99/99-1 | 40-99/60-1 | 80/20 |
| HFC-1225ye/HFC-1234yf/HFC-134a | 1-98/1-98/0.1-98 | 10-90/10-90/0.1-50 | 70/20/10 and 20/70/20 |
| HFC-1225ye/HFC-1234yf/HFC-32 | 1-98/1-98/0.1-98 | 10-90/10-90/0.1-50 | 25/73/2, 75/23/2, and 49/49/2 |
| HFC-1225ye/HFC-1234yf/HFC-152a | 1-98/1-98/0.1-98 | 10-90/10-90/0.1-50 | 70/25/5 and 25/70/5 |
| HFC-32/HFC-125/HFC-1234yf | 0.1-98/0.1-98/0.1-98 | 5-70/5-70/5-70 | 40/50/10, 23/25/52, 15/45/40, and 10/60/30 |
| HFC-1234yf/HFC-32/HFC-143a | 1-50/1-98/1-98 | 15-50/20-80/5-60 | |
| HFC-1234vf/HFC-32/isobutane | 1-40/59-98/1-30 | 10-40/59-90/1-10 | |
| HFC-1234yf/HFC-125/HFC-143a | 1-60/1-98/1-98 | 10-60/20-70/20-70 | |
| HFC-1234vf/HFC-134a/propane | 1-80/1-80/19-98 | 10-80/10-80/19-50 | |
| HFC-1234vf/HFC-134a/n-butane | 1-98/1-98/1-30 | 10-80/10-80/1-20 | |
| HFC-1234yf/HFC-134a/isobutane | 1-98/1-98/1-30 | 10-80/10-80/1-20 | |
| HFC-1234vf/HFC-134a/DME | 1-98/1-98/1-40 | 10-80/10-80/1-20 | |
| HFC-1234yf/HFC-152a/n-butane | 1-98/1-98/1-30 | 10-80/10-80/1-20 | |
| HFC-1234yf/HFC-152a/isobutane | 1-98/1-90/1-40 | 10-80/10-80/1-20 | |
| HFC-1234yf/HFC-152a/DME | 1-70/1-98/1-98 | 10-70/10-80/1-20 | |
| HFC-1225ye/HFC-1234yf/HFC-32/HFC-125 | 1-97/1-97/1-97/1-97/1-97 | 1-80/1-70/5-70/5-70 | |
| HFC-1225ye/HFC-1234yf/HFC-32/HFC-134a | 1-97/1-97/1-97/1-97/1-97 | 5-70/5-70/5-80/5-70 | |
| HFC-1225ye/HFC-1234yf/HFC-32/HFC-125/CF₃I | 1-96/1-96/1-96/1-96/1-96 | 1-70/1-60/1-70/1-60/1-60 | |
| HFC-1234yf/HFC-32/CF₃I | 1-98/1-98/1-98 | 10-80/1-70/1-80 | |
| HFC-1234yf/HFC-32/HFC-134a/CF₃I | 1-97/1-97/1-97/1-97 | 5-70/5-80/1-70/5-70 | |
| HFC-1234yf/HFC-32/HFC-125 | 1-98/1-98/1-98 | 10-80/5-80/10-80 | |
| HFC-1234yf/HFC-32/HFC-125/ CF₃I | 1-97/1-97/1-97/1-97 | 10-80/5-70/10-80/5-80 | |

The compositions of the present invention may be azeotropic or near-azeotropic compositions. By azeotropic composition is meant a constant-boiling mixture of two or more substances that behave as a single substance. One way to characterize an azeotropic composition is that the vapor produced by partial evaporation or distillation of the liquid has the same composition as the liquid from which it is evaporated or distilled, i.e., the mixture distills/refluxes without compositional change. Constant-boiling compositions are characterized as azeotropic because they exhibit either a maximum or minimum boiling point, as compared with that of the non-azeotropic mixture of the same compounds. An azeotropic composition will not fractionate within a refrigeration or air conditioning system during operation, which may reduce efficiency of the system. Additionally, an azeotropic composition will not fractionate upon leakage from a refrigeration or air conditioning system. In the situation where one component of a mixture is flammable, fractionation during leakage could lead to a flammable composition either within the system or outside of the system.

A near-azeotropic composition (also commonly referred to as an "azeotrope-like composition") is a substantially constant boiling liquid admixture of two or more substances that behaves essentially as a single substance. One way to characterize a near-azeotropic composition is that the vapor produced by partial evaporation or distillation of the liquid has substantially the same composition as the liquid from which it was evaporated or distilled, that is, the admixture distills/refluxes without substantial composition change. Another way to characterize a near-azeotropic composition is that the bubble point vapor pressure and the dew point vapor pressure of the composition at a particular temperature are substantially the same. Herein, a composition is near-azeotropic if, after 50 weight percent of the composition is removed, such as by evaporation or boiling off, the difference in vapor pressure between the original composition and the composition remaining after 50 weight percent of the original composition has been removed is less than 10 percent.

Azeotropic compositions of the present invention at a specified temperature are shown in Table 3.

**TABLE 3**

| **Component A** | **Component B** | **Wt% A** | **Wt% B** | **Psia** | **kPa** | **T(C)** |
|---|---|---|---|---|---|---|
| HFC-1234yf | HFC-32 | 7.4 | 92.6 | 49.2 | 339 | -25 |
| HFC-1234yf | HFC-134a | 70.4 | 29.6 | 18.4 | 127 | -25 |
| HFC-1234yf | HFC-152a | 91.0 | 9.0 | 17.9 | 123 | -25 |

Additionally, ternary azeotrope compositions have been found as listed in Table 4.

**TABLE 4**

| Component A | Component B | Component C | Wt% A | Wt% B | Wt% C | Pres (psi) | Pres (kPa) | Temp (°C) |
|---|---|---|---|---|---|---|---|---|
| HFC-1234yf | HFC-32 | HFC-143A | 3.9 | 74.3 | 21.8 | 50.02 | 345 | -25 |
| HFC-1234yf | HFC-32 | isobutane | 1.1 | 92.1 | 6.8 | 50.05 | 345 | -25 |
| HFC-1234yf | HFC-125 | HFC-143A | 14.4 | 43.5 | 42.1 | 38.62 | 266 | -25 |
| HFC-1234yf | HFC-134a | propane | 24.5 | 31.1 | 44.5 | 34.01 | 234 | -25 |
| HFC-1234yf | HFC-134a | n-butane | 60.3 | 35.2 | 4.5 | 18.58 | 128 | -25 |
| HFC-1234yf | HFC-134a | isobutane | 48.6 | 37.2 | 14.3 | 19.86 | 137 | -25 |
| HFC-1234yf | HFC-134a | DME | 24.0 | 67.9 | 8.1 | 17.21 | 119 | -25 |
| HFC-1234yf | HFC-152a | n-butane | 86.6 | 10.8 | 2.7 | 17.97 | 124 | -25 |
| HFC-1234yf | HFC-152a | isobutane | 75.3 | 11.8 | 12.9 | 19.12 | 132 | -25 |
| HFC-1234yf | HFC-152a | DME | 24.6 | 43.3 | 32.1 | 11.78 | 81.2 | -25 |

The near-azeotropic compositions of the present invention at a specified temperature are listed in Table 5.

**TABLE 5**

| **Component A** | **Component B** | **(wt% A/wt% B)** | **T(C)** |
|---|---|---|---|
| HFC-1234yf | HFC-32 | 1-57/99-43 | -25 |
| HFC-1234yf | HFC-134a | 1-99/99-1 | -25 |
| HFC-1234yf | HFC-152a | 1-99/99-1 | -25 |

Ternary and higher order near-azeotrope compositions comprising fluoroolefin have also been identified as listed in Table 6.

**TABLE 6**

| Components | Near-azeotrope range (weight percent) | Temp (°C) |
|---|---|---|
| HFC-1225ye/HFC-1234yf/HFC-134a | 1-98/1-98/1-98 | 25 |
| HFC-1225ye/HFC-1234yf/HFC-152a | 1-98/1-98/1-98 | 25 |
| HFC-32/HFC-125/HFC-1234yf | 1-98/1-98/1-55 | 25 |
| HFC-1234yf/HFC-32/HFC-143a | 1-50/1-98/1-98 | -25 |
| HFC-1234yf/HFC-32/isobutane | 1-40/59-98/1-30 | -25 |
| HFC-1234yf/HFC-125/HFC-143a | 1-60/1-98/1-98 | -25 |
| HFC-1234yf/HFC-134a/propane | 1-80/1-80/19-98 | -25 |
| HFC-1234yf/HFC-134a/n-butane | 1-98/1-98/1-30 | -25 |
| HFC-1234yf/HFC-134a/isobutane | 1-98/1-98/1-30 | -25 |
| HFC-1234yf/HFC-134a/DME | 1-98/1-98/1-40 | -25 |
| HFC-1234yf/HFC-152a/n-butane | 1-98/1-98/1-30 | -25 |
| HFC-1234yf/HFC-152a/isobutane | 1-98/1-90/1-40 | -25 |
| HFC-1234yf/HFC-152a/DME | 1-70/1-98/1-98 | -25 |

Certain of the compositions of the present invention are non-azeotropic compositions. Those compositions of the present invention falling within the preferred ranges of Table 2, but outside of the near-azeotropic ranges of Table 5 and Table 6 may be considered to be non-azeotropic.

A non-azeotropic composition may have certain advantages over azeotropic or near azeotropic mixtures. A non-azeotropic composition is a mixture of two or more substances that behaves as a mixture rather than a single substance. One way to characterize a non-azeotropic composition is that the vapor produced by partial evaporation or distillation of the liquid has a substantially different composition as the liquid from which it was evaporated or distilled, that is, the admixture distills/refluxes with substantial composition change. Another way to characterize a non- azeotropic composition is that the bubble point vapor pressure and the dew point vapor pressure of the composition at a particular temperature are substantially different. Herein, a composition is non-azeotropic if, after 50 weight percent of the composition is removed, such as by evaporation or boiling off, the difference in vapor pressure between the original composition and the composition remaining after 50 weight percent of the original composition has been removed is greater than 10 percent.

The compositions of the present invention may be prepared by any convenient method to combine the desired amounts of the individual components. A preferred method is to weigh the desired component amounts and thereafter combine the components in an appropriate vessel. Agitation may be used, if desired.

An alternative means for making compositions of the present invention may be a method for making a refrigerant blend composition, wherein said refrigerant blend composition comprises a composition as disclosed herein, said method comprising (i) reclaiming a volume of one or more components of a refrigerant composition from at least one refrigerant container, (ii) removing impurities sufficiently to enable reuse of said one or more of the reclaimed components, (iii) and optionally, combining all or part of said reclaimed volume of components with at least one additional refrigerant composition or component.

A refrigerant container may be any container in which is stored a refrigerant blend composition that has been used in a refrigeration apparatus, air-conditioning apparatus or heat pump apparatus. Said refrigerant container may be the refrigeration apparatus, air-conditioning apparatus or heat pump apparatus in which the refrigerant blend was used. Additionally, the refrigerant container may be a storage container for collecting reclaimed refrigerant blend components, including but not limited to pressurized gas cylinders.

Residual refrigerant means any amount of refrigerant blend or refrigerant blend component that may be moved out of the refrigerant container by any method known for transferring refrigerant blends or refrigerant blend components.

Impurities may be any component that is in the refrigerant blend or refrigerant blend component due to its use in a refrigeration apparatus, air-conditioning apparatus or heat pump apparatus. Such impurities include but are not limited to refrigeration lubricants, being those described earlier herein, particulates including but not limited to metal, metal salt or elastomer particles, that may have come out of the refrigeration apparatus, air-conditioning apparatus or heat pump apparatus, and any other contaminants that may adversely effect the performance of the refrigerant blend composition.

Such impurities may be removed sufficiently to allow reuse of the refrigerant blend or refrigerant blend component without adversely effecting the performance or equipment within which the refrigerant blend or refrigerant blend component will be used.

It may be necessary to provide additional refrigerant blend or refrigerant blend component to the residual refrigerant blend or refrigerant blend component in order to produce a composition that meets the specifications required for a given product. For instance, if a refrigerant blend has 3 components in a particular weight percentage range, it may be necessary to add one or more of the components in a given amount in order to restore the composition to within the specification limits.

Compositions of the present invention have zero or low ozone depletion potential and low global warming potential (GWP). Additionally, the compositions of the present invention will have global warming potentials that are less than many hydrofluorocarbon refrigerants currently in use. One aspect of the present invention is to provide a refrigerant with a global warming potential of less than 1000, less than 500, less than 150, less than 100, or less than 50. Another aspect of the present invention is to reduce the net GWP of refrigerant mixtures by adding fluoroolefins to said mixtures.

The compositions of the present invention may be useful as low global warming potential (GWP) replacements for currently used refrigerants, including but not limited to R134a (or HFC-134a, 1,1,1,2-tetrafluoroethane), R22 (or HCFC-22, chlorodifluoromethane), R123 (or HFC-123, 2,2-dichloro-1,1,1-trifluoroethane), R11 (CFC-11, fluorotrichloromethane), R12 (CFC-12, dichlorodifluoromethane), R245fa (or HFC-245fa, 1,1,1,3,3-pentafluoropropane), R114 (or CFC-114, 1,2-dichloro-1,1,2,2-tetrafluoroethane), R236fa (or HFC-236fa, 1,1,1,3,3,3-hexafluoropropane), R124 (or HCFC-124, 2-chloro-1,1,1,2-tetrafluoroethane), R407C (ASHRAE designation for a blend of 52 weight percent R134a, 25 weight percent R125 (pentafluoroethane), and 23 weight percent R32 (difluoromethane), R410A (ASHRAE designation for a blend of 50 weight percent R125 and 50 weight percent R32), R417A, (ASHRAE designation for a blend of 46.6 weight percent R125, 50.0 weight percent R134a, and 3.4 weight percent n-butane), R422A (ASHRAE designation for a blend of 85.1 weight percent R125, 11.5 weight percent R134a, and 3.4 weight percent isobutane), R404A, (ASHRAE designation for a blend of 44 weight percent R125, 52 weight percent R143a (1,1,1-trifluoroethane), and 4.0 weight percent R134a) and R507A (ASHRAE designation for a blend of 50 weight percent R125 and 50 weight percent R143a). Additionally, the compositions of the present invention may be useful as replacements for R12 (CFC-12, dichlorodifluoromethane) or R502 (ASHRAE designation for a blend of 51.2 weight percent CFC-115 (chloropentafluoroethane) and 48.8 weight percent HCFC-22).

Often replacement refrigerants are most useful if capable of being used in the original refrigeration equipment designed for a different refrigerant. The compositions of the present invention may be useful as replacements for the above-mentioned refrigerants in original equipment. Additionally, the compositions of the present invention may be useful as replacements for the above mentioned refrigerants in equipment designed to use the above-mentioned refrigerants.

The compositions of the present invention further comprise a lubricant.

Lubricants of the present invention comprise refrigeration lubricants, i.e. those lubricants suitable for use with refrigeration, air-conditioning, or heat pump apparatus. Among these lubricants are those conventionally used in compression refrigeration apparatus utilizing chlorofluorocarbon refrigerants. Such lubricants and their properties are discussed in the 1990 ASHRAE Handbook, Refrigeration Systems and Applications, chapter 8, titled "Lubricants in Refrigeration Systems", pages 8.1 through 8.21.

Lubricants of the present invention comprise those that have been designed for use with hydrofluorocarbon refrigerants and are miscible with refrigerants of the present invention under compression refrigeration, air-conditioning, or heat pump apparatus' operating conditions. Such lubricants and their properties are discussed in "Synthetic Lubricants and High-Performance Fluids", R. L. Shubkin, editor, Marcel Dekker, 1993. The lubricants of the present invention are selected from polyol esters (POEs) such as Castrol® 100 (Castrol, United Kingdom), and polyvinyl ethers (PVEs). These lubricants are readily available from various commercial sources.

Lubricants of the present invention are selected by considering a given compressor's requirements and the environment to which the lubricant will be exposed. Lubricants of the present invention preferably have a kinematic viscosity of at least 5 cs (centistokes) at 40°C.

The present invention further relates to a method for replacing a high GWP refrigerant in a refrigeration, air-conditioning, or heat pump apparatus, wherein said high GWP refrigerant is selected from the group consisting of R134a, R22, R245fa, R114, R236fa, R124, R410A, R407C, R417A, R422A, R507A, and R404A, said method comprising providing a composition of the present invention to said refrigeration, air-conditioning, or heat pump apparatus that uses, used or is designed to use said high GWP refrigerant.

Vapor-compression refrigeration, air-conditioning, or heat pump systems include an evaporator, a compressor, a condenser, and an expansion device. A vapor-compression cycle re-uses refrigerant in multiple steps producing a cooling effect in one step and a heating effect in a different step. The cycle can be described simply as follows. Liquid refrigerant enters an evaporator through an expansion device, and the liquid refrigerant boils in the evaporator at a low temperature to form a gas and produce cooling. The low-pressure gas enters a compressor where the gas is compressed to raise its pressure and temperature. The higher-pressure (compressed) gaseous refrigerant then enters the condenser in which the refrigerant condenses and discharges its heat to the environment. The refrigerant returns to the expansion device through which the liquid expands from the higher-pressure level in the condenser to the low-pressure level in the evaporator, thus repeating the cycle.

As used herein, mobile refrigeration apparatus or mobile air-conditioning apparatus refers to any refrigeration or air-conditioning apparatus incorporated into a transportation unit for the road, rail, sea or air. In addition, apparatus, which are meant to provide refrigeration or air-conditioning for a system independent of any moving carrier, known as "intermodal" systems, are included in the present invention. Such intermodal systems include "containers" (combined sea/land transport) as well as "swap bodies" (combined road and rail transport). The present invention is particularly useful for road transport refrigerating or air-conditioning apparatus, such as automobile air-conditioning apparatus or refrigerated road transport equipment.

The present invention further relates to a process for producing cooling comprising evaporating the compositions of the present invention in the vicinity of a body to be cooled, and thereafter condensing said compositions.

The present invention further relates to a process for producing heat comprising condensing the compositions of the present invention in the vicinity of a body to be heated, and thereafter evaporating said compositions.

The present invention further relates to a refrigeration, air-conditioning, or heat pump apparatus containing a composition of the present invention.

Further described herein is a mobile air-conditioning apparatus containing a composition of the present invention.

Further described herein is a method of using the compositions of the present invention as a heat transfer fluid composition, said process comprising transporting said composition from a heat source to a heat sink.

Heat transfer fluids are utilized to transfer, move or remove heat from one space, location, object or body to a different space, location, object or body by radiation, conduction, or convection. A heat transfer fluid may function as a secondary coolant by providing means of transfer for cooling (or heating) from a remote refrigeration (or heating) system. In some systems, the heat transfer fluid may remain in a constant state throughout the transfer process (i.e., not evaporate or condense). Alternatively, evaporative cooling processes may utilize heat transfer fluids as well.

A heat source may be defined as any space, location, object or body from which it is desirable to transfer, move or remove heat. Examples of heat sources may be spaces (open or enclosed) requiring refrigeration or cooling, such as refrigerator or freezer cases in a supermarket, building spaces requiring air-conditioning, or the passenger compartment of an automobile requiring air-conditioning. A heat sink may be defined as any space, location, object or body capable of absorbing heat. A vapor compression refrigeration system is one example of such a heat sink.

### EXAMPLES

### EXAMPLE 1

### Impact of vapor leakage

A vessel is charged with an initial composition at a temperature of either -25 °C or if specified, at 25 °C, and the initial vapor pressure of the composition is measured. The composition is allowed to leak from the vessel, while the temperature is held constant, until 50 weight percent of the initial composition is removed, at which time the vapor pressure of the composition remaining in the vessel is measured. Results are shown in Table 9.

**TABLE 9**

| Composition wt% | Initial P (Psia) | Initial P (kPa) | After 50% Leak (Psia) | After 50% Leak (kPa) | Delta P (%) |
|---|---|---|---|---|---|
| HFC-1234yf/HFC-32 | | | | | |
| 7.4/92.6 | 49.2 | 339 | 49.2 | 339 | 0.0% |
| 1/99 | 49.2 | 339 | 49.2 | 339 | 0.0% |
| 20/80 | 49.0 | 338 | 48.8 | 337 | 0.3% |
| 40/60 | 47.5 | 327 | 47.0 | 324 | 1.0% |
| 57/43 | 44.9 | 309 | 40.5 | 280 | 9.6% |
| 58/42 | 44.6 | 308 | 40.1 | 276 | 10.2% |
| | | | | | |

| HFC-1234f/HFC-134a | | | | | |
|---|---|---|---|---|---|
| 70.4/29.6 | 18.4 | 127 | 18.4 | 127 | 0.0% |
| 80/20 | 18.3 | 126 | 18.3 | 126 | 0.1% |
| 90/10 | 18.2 | 125 | 18.1 | 125 | 0.1% |
| 99/1 | 17.9 | 123 | 17.9 | 123 | 0.1% |
| 40/60 | 17.9 | 123 | 17.8 | 123 | 0.7% |
| 20/80 | 17.0 | 117 | 16.7 | 115 | 1.7% |
| 10/90 | 16.4 | 113 | 16.1 | 111 | 1.5% |
| 1/99 | 15.6 | 107 | 15.6 | 107 | 0.3% |
| | | | | | |

| HFC-1234yf/HFC-152a | | | | | |
|---|---|---|---|---|---|
| 91.0/9.0 | 17.9 | 123 | 17.9 | 123 | 0.0% |
| 99/1 | 17.9 | 123 | 17.8 | 123 | 0.1% |
| 60/40 | 17.4 | 120 | 17.2 | 119 | 0.7% |
| 40/60 | 16.6 | 115 | 16.4 | 113 | 1.6% |
| 20/80 | 15.7 | 108 | 15.4 | 106 | 2.0% |
| 10/90 | 15.1 | 104 | 14.9 | 103 | 1.5% |
| 1/99 | 14.6 | 100 | 14.5 | 100 | 0.2% |
| | | | | | |

| HFC-1225ye/HFC-1234yf/HFC-134a (25°C) | | | | | |
|---|---|---|---|---|---|
| 70/20/10 | 86.0 | 593 | 84.0 | 579 | 2.3% |
| 20/70/10 | 98.2 | 677 | 97.5 | 672 | 0.7% |
| | | | | | |

| HFC-1225ye/HFC-1234yf/HFC-152a (25 °C) | | | | | |
|---|---|---|---|---|---|
| 70/25/5 | 85.1 | 587 | 83.4 | 575 | 2.0% |
| 25/70/5 | 95.4 | 658 | 94.9 | 654 | 0.5% |

The difference in vapor pressure between the original composition and the composition remaining after 50 weight percent is removed is less then about 10 percent for compositions of the present invention. This indicates that the compositions of the present invention would be azeotropic or near-azeotropic.

### EXAMPLE 2

### Refrigeration Performance Data

Table 10 shows the performance of various refrigerant compositions of the present invention as compared to HFC-134a. In Table 10, Evap Pres is evaporator pressure, Cond Pres is condenser pressure, Comp Disch T is compressor discharge temperature, COP is energy efficiency, and CAP is capacity. The data are based on the following conditions.

| | |
|---|---|
| Evaporator temperature | 40.0°F (4.4°C) |
| Condenser temperature | 130.0°F (54.4°C) |
| Subcool temperature | 10.0°F (5.5°C) |
| Return gas temperature | 60.0°F (15.6°C) |
| Compressor efficiency is | 100% |

Note that the superheat is included in cooling capacity calculations.

**TABLE 10**

| **Composition (wt%)** | **Evap Pres (Psia)** | **Evap Pres (kPa)** | **Cond Pres (Psia)** | **Cond Pres (kPa)** | **Comp Disch T (F)** | **Comp Disch T (C)** | **Cap (Btu/ min)** | **Cap (kW)** | **COP** |
|---|---|---|---|---|---|---|---|---|---|
| HFC-134a | 50.3 | 346 | 214 | 1476 | 156 | 68.9 | 213 | 3.73 | 4.41 |
| HFC-1234yf/HFC-32 (95/5) | 58.6 | 404 | 230 | 1586 | 149 | 65.0 | 228 | 4.00 | 4.36 |
| HFC-1234yf/HFC-134a (90/10) | 52.7 | 363 | 210 | 1448 | 145 | 62.8 | 206 | 3.61 | 4.33 |
| HFC-1234yf/HFC-152a (80/20) | 53.5 | 369 | 213 | 1468 | 150 | 65.6 | 213 | 3.73 | 4.38 |
| HFC-1225ye/HFC-1234yf/HFC-134a (70/20/10) | 43.0 | 296 | 183 | 1261 | 147 | 63.9 | 179 | 3.13 | 4.38 |
| HFC-1225ye/HFC-1234yf/HFC-134a (20/70/10) | 50.7 | 350 | 205 | 1412 | 145 | 62.8 | 200 | 3.50 | 4.34 |
| HFC-1225ye/HFC-1234yf/HFC-32 (25/73/2) | 53.0 | 365 | 212 | 1464 | 146 | 63.3 | 210 | 3.68 | 4.37 |
| HFC-1225ye/HFC-1234yf/HFC-32 (75/23/2) | 45.3 | 312 | 190 | 1312 | 148 | 64.4 | 189 | 3.31 | 4.43 |
| HFC-1225ye/HFC-1234yf/HFC-152a 70/25/5 | 42.8 | 295 | 181 | 1250 | 147 | 63.9 | 179 | 3.13 | 4.40 |
| HFC-1225ye/HFC-1234yf/HFC-152a (25/70/5) | 49.9 | 344 | 202 | 1392 | 146 | 63.3 | 199 | 3.49 | 4.35 |
| HFC-1225ye/HFC-1234yf/HFC-32(49/49/2) | 49.5 | 341 | 202.5 | 1396 | 146.9 | 63.8 | 201 | 3.52 | 4.4 |

Several compositions have even higher energy efficiency (COP) than HFC-134a while maintaining lower discharge pressures and temperatures. Capacity for the present compositions is also similar to R134a indicating these could be replacement refrigerants for R134a in refrigeration and air-conditioning, and in mobile air-conditioning applications in particular. Those compositions containing hydrocarbon may also improve oil solubility with conventional mineral oil and alkyl benzene lubricants.

### EXAMPLE 3

### Refrigeration Performance Data

Table 11 shows the performance of various refrigerant compositions of the present invention as compared to R404A and R422A. In Table 11, Evap Pres is evaporator pressure, Cond Pres is condenser pressure, Comp Disch T is compressor discharge temperature, EER is energy efficiency, and CAP is capacity. The data are based on the following conditions.

| | |
|---|---|
| Evaporator temperature | -17.8°C |
| Condenser temperature | 46.1°C |
| Subcool temperature | 5.5°C |
| Return gas temperature | 15.6°C |
| Compressor efficiency is | 70% |

Note that the superheat is included in cooling capacity calculations.

**TABLE 11**

| Existing Refrigerant Product | | Evap Press (kPa)) | Cond P Press (kPa) | Compr Disch T (C) | CAP (kJ/m3) | EER |
|---|---|---|---|---|---|---|
| R22 | | 267 | 1774 | 144 | 1697 | 4.99 |
| R404A | | 330 | 2103 | 101.1 | 1769 | 4.64 |
| R507A | | 342 | 2151 | 100.3 | 1801 | 4.61 |
| R422A | | 324 | 2124 | 95.0 | 1699 | 4.54 |

| Candidate | wt% | | | | | |
|---|---|---|---|---|---|---|
| Replacement | | | | | | |
| HFC-32/CF₃I/HFC-1234yf | 5/50/45 | 199 | 1377 | 107 | 1254 | 5.11 |
| HFC-32/CF₃I/HFC-1234yf | 5/30/65 | 197 | 1382 | 103 | 1241 | 5.11 |
| HFC-32/CF₃I/HFC-1234yf | 10/25/65 | 220 | 1542 | 107 | 1374 | 5.04 |
| HFC-32/CF₃I/HFC-1234yf | 20/10/70 | 255 | 1786 | 114 | 1577 | 4.95 |
| HFC-32/CF₃I/HFC-1234yf | 30/10/60 | 295 | 2020 | 123 | 1795 | 4.88 |
| HFC-32/CF₃I/HFC-1234yf | 30/20/50 | 305 | 2057 | 125 | 1843 | 4.85 |
| HFC-32/CF₃I/HFC-1234yf | 30/30/40 | 314 | 2091 | 128 | 1887 | 4.85 |
| HFC-32/CF₃I/HFC-1234yf | 20/40/40 | 275 | 1861 | 121 | 1679 | 4.92 |
| HFC-32/CF₃I/HFC-1234yf | 10/40/50 | 225 | 1558 | 111 | 1404 | 5.04 |
| HFC-32/CF₃I/HFC-1234yf | 50/20/30 | 378 | 2447 | 143 | 2238 | 4.73 |
| HFC-32/CF₃I/HFC-1234yf | 40/30/30 | 354 | 2305 | 137 | 2099 | 4.76 |
| HFC-32/CF₃I/HFC-1234yf | 40/40/20 | 360 | 2336 | 142 | 2136 | 4.74 |
| HFC-32/CF₃I/HFC-1234yf | 35/35/30 | 338 | 2217 | 135 | 2015 | 4.78 |
| HFC-32/CF₃I/HFC-1234yf | 35/30/35 | 334 | 2202 | 133 | 1996 | 4.80 |
| HFC-32/CF₃I/HFC-1234yf | 50/25/25 | 384 | 2468 | 145 | 2267 | 4.72 |
| HFC-32/CF₃I/HFC-1225ye/HFC-1234yf | 40/20/20/20 | 331 | 2246 | 136 | 1999 | 4.76 |
| HFC-32/CF₃I/HFC-1225ye/HFC-1234yf | 30/20/25/25 | 290 | 2029 | 127 | 1782 | 4.83 |
| HFC-32/CF₃I/HFC-1225ye/HFC-1234yf | 30/10/30/30 | 279 | 1987 | 125 | 1728 | 4.83 |
| HFC-32/HFC-125/HFC-1234yf/HFC-1225ye | 25/25/25/25 | 297 | 2089 | 118 | 1772 | 4.76 |
| HFC-32/HFC-125/HFC-1234yf/HFC-1225ye | 20/30/25/25 | 286 | 2025 | 113 | 1702 | 4.64 |
| HFC-32/HFC-125/HFC-1234yf/HFC-1225ye | 20/30/30/20 | 290 | 2033 | 113 | 1717 | 4.76 |
| HFC-32/HFC-125/HFC-1234yf/HFC-1225ye | 20/30/40/10 | 297 | 2048 | 112 | 1746 | 4.78 |
| HFC-32/HFC-125/HFC-1234yf/HFC-1225ye | 30/30/20/20 | 328 | 2251 | 122 | 1925 | 4.71 |
| HFC-32/HFC-125/HFC-1234yf/HFC-1225ye | 30/30/1/39 | 312 | 2217 | 123 | 1858 | 4.68 |
| HFC-32/HFC-125/HFC-1234yf/HFC-1225ye | 30/30/39/1 | 342 | 2275 | 120 | 1979 | 4.73 |
| HFC-32/HFC-125/HFC-1234yf/HFC-1225ye | 30/30/10/30 | 320 | 2235 | 123 | 1891 | 4.68 |
| HFC-32/HFC-125/HFC-1234yf/HFC-1225ye | 35/30/5/30 | 337 | 2330 | 127 | 1986 | 4.66 |
| HFC-32/HFC-125/HFC-1234yf/HFC-1225ye | 20/15/10/55 | 240 | 1818 | 115 | 1513 | 4.85 |
| HFC-32/HFC-125/HFC-1234yf/HFC-1225ye | 30/15/10/45 | 284 | 2066 | 124 | 1743 | 4.76 |
| HFC-32/HFC-125/HFC-1234yf/HFC-1225ye | 40/30/15/15 | 341 | 2364 | 132 | 2022 | 4.66 |
| HFC-32/HFC-125/CF₃I/HFC-1234yf/HFC-1225ye | 30/25/5/35/5 | 335 | 2240 | 121 | 1954 | 4.76 |
| HFC-32/HFC-125/CF₃I/HFC-1234yf | 30/25/5/40 | 338 | 2245 | 121 | 1966 | 4.76 |
| HFC-32/HFC-125/HFC-1234yf | 25/50/25 | 365 | 2376 | 115 | 2040 | 4.66 |
| HFC-32/HFC-125/HFC-1234yf | 30/30/40 | 343 | 2276 | 120 | 1982 | 4.73 |
| HFC-32/HFC-125/HFC-1234yf | 20/30/50 | 303 | 2059 | 112 | 1770 | 4.78 |
| HFC-32/HFC-125/CF₃I/HFC-1234yf | 25/25/10/40 | 323 | 2154 | 118 | 1884 | 4.78 |

Several compositions have energy efficiency (COP) comparable to R404A and R422A. Discharge temperatures are also lower than R404A and R507A. Capacity for the present compositions is also similar to R404A, R507A, and R422A indicating these could be replacement refrigerants for in refrigeration and air-conditioning. Those compositions containing hydrocarbon may also improve oil solubility with conventional mineral oil and alkyl benzene lubricants.

### EXAMPLE 4

### Refrigeration Performance Data

Table 12 shows the performance of various refrigerant compositions of the present invention as compared to HCFC-22, R410A, R407C, and R417A. In Table 12, Evap Pres is evaporator pressure, Cond Pres is condenser pressure, Comp Disch T is compressor discharge temperature, EER is energy efficiency, and CAP is capacity. The data are based on the following conditions.

| | |
|---|---|
| Evaporator temperature | 4.4°C |
| Condenser temperature | 54.4°C |
| Subcool temperature | 5.5°C |
| Return gas temperature | 15.6°C |
| Compressor efficiency is | 100% |

Note that the superheat is included in cooling capacity calculations.

**TABLE 12**

| Existing Refrigerant Product | | Evap Press (kPa)) | Cond Press (kPa) | Compr Disch T (C) | CAP (kJ/m3) | EER |
|---|---|---|---|---|---|---|
| R22 | | 573 | 2149 | 88.6 | 3494 | 14.73 |
| R410A | | 911 | 3343 | 89.1 | 4787 | 13.07 |
| R407C | | 567 | 2309 | 80.0 | 3397 | 14.06 |
| R417A | | 494 | 1979 | 67.8 | 2768 | 13.78 |

| Candidate Replacement | wt% | | | | | |
|---|---|---|---|---|---|---|
| HFC-32/HFC-125/HFC-1234yf | 40/50/10 | 868 | 3185 | 84.4 | 4496 | 13.06 |
| HFC-32/HFC-125/HFC-1234yf | 23/25/52 | 656 | 2517 | 76.7 | 3587 | 13.62 |
| HFC-32/HFC-125/HFC-1234yf | 15/45/40 | 669 | 2537 | 73.3 | 3494 | 13.28 |
| HFC-32/HFC-125/HFC-1234yf | 10/60/30 | 689 | 2586 | 71.3 | 3447 | 12.96 |

Compositions have energy efficiency (EER) comparable to R22, R407C, R417A, and R410A while maintaining low discharge temperatures. Capacity for the present compositions is also similar to R22, R407C and R417A indicating these could be replacement refrigerants for in refrigeration and air-conditioning. Those compositions containing hydrocarbon may also improve oil solubility with conventional mineral oil and alkyl benzene lubricant.

### EXAMPLE 5

### Refrigeration Performance Data

Table 12 shows the performance of various refrigerant compositions of the present invention as compared to HCFC-22 and R410A. In Table 12, Evap Pres is evaporator pressure, Cond Pres is condenser pressure, Comp Disch T is compressor discharge temperature, EER is energy efficiency, and CAP is capacity. The data are based on the following conditions.

| | |
|---|---|
| Evaporator temperature | 4°C |
| Condenser temperature | 43°C |
| Subcool temperature | 6°C |
| Return gas temperature | 18°C |
| Compressor efficiency is | 70% |

Note that the superheat is included in cooling capacity calculations.

**TABLE 13**

| Composition (wt%) | Evap Press (kPa) | Cond Press (kPa) | Compr Disch Temp (C) | CAP (kJ/m3) | EER |
|---|---|---|---|---|---|
| R22 | 565 | 1648 | 90.9 | 3808 | 9.97 |
| R410A | 900 | 2571 | 88.1 | 5488 | 9.27 |
| HFC-32/HFC-134a/HFC-1234yf/CF₃I (30/20/5/45) | 611 | 1845 | 89.6 | 4107 | 9.66 |
| HFC-32/HFC-134a/HFC-1234yf/CF₃I (25/20/10/45) | 575 | 1745 | 86.5 | 3891 | 9.76 |
| HFC-32/HFC-134a/HFC-1234yf/CF₃I (35/10/5/40) | 646 | 1939 | 91.2 | 4308 | 9.62 |
| HFC-32/HFC-134a/HFC-1225ye/HFC-1234yf(34/12/47/7) | 587 | 1822 | 84 | 4001 | 9.69 |
| HFC-32/HFC-134a/HFC-1225ye/HFC-1234yf(30/8/52/10) | 561 | 1752 | 81.9 | 3841 | 9.73 |
| HFC-32/HFC-134a/HFC-1225ye/HFC-1234yf(35/6/52/7) | 597 | 1852 | 84.3 | 4051 | 9.66 |

Compositions have energy efficiency (EER) comparable to R22 and R410A while maintaining reasonable discharge temperatures. Capacity for the present compositions is also similar to R22 indicating these could be replacement refrigerants for in refrigeration and air-conditioning.

## Claims

1. A composition comprising:
a lubricant, HFC-1234yf and HFC-134a; a lubricant, HFC-1234yf and HFC-152a; a lubricant, HFC-1234yf and HFC-32; a lubricant, HFC-1234yf, HFC-32 and HFC-125; a lubricant, HFC-1234yf, HFC-32 and HFC-143a; or a lubricant, HFC-1234yf, HFC-125 and HFC-143a;
wherein the lubricant is selected from the group consisting of polyol esters and polyvinyl ethers.

2. The composition of claim 1, comprising a lubricant, and
about 1 weight percent to about 99 weight percent HFC-1234yf and about 99 weight percent to about 1 weight percent HFC-134a; about 1 weight percent to about 99 weight percent HFC-1234yf and about 99 weight percent to about 1 weight percent HFC-32; about 1 weight percent to about 99 weight percent HFC-1234yf and about 99 weight percent to about 1 weight percent HFC-152a; about 0.1 weight percent to about 98 weight percent HFC-32, about 0.1 weight percent to about 98 weight percent HFC-125, and about 0.1 weight percent to about 98 weight percent HFC-1234yf; about 1 weight percent to about 50 weight percent HFC-1234yf, about 1 weight percent to about 98 weight percent HFC-32 and about 1 weight percent to about 98 weight percent HFC-143a; about 1 weight percent to about 60 weight percent HFC-1234yf, about 1 weight percent to about 98 weight percent HFC-125 and about 1 weight percent to about 98 weight percent HFC-143a; or about 1 weight percent to about 98 weight percent HFC-1234yf, about 1 weight percent to about 98 weight percent HFC-32 and about 1 weight percent to about 98 weight percent HFC-125;
wherein the lubricant is selected from the group consisting of polyol esters and polyvinyl ethers.

3. The composition of claims 1 or 2, comprising a lubricant, and
about 30 weight percent to about 99 weight percent HFC-1234yf and about 70 weight percent to about 1 weight percent HFC-134a; about 40 weight percent to about 99 weight percent HFC-1234yf and about 60 weight percent to about 1 weight percent HFC-32; about 40 weight percent to about 99 weight percent HFC-1234yf and about 60 weight percent to about 1 weight percent HFC-152a; about 5 weight percent to about 70 weight percent HFC-32, about 5 weight percent to about 70 weight percent HFC-125, and about 5 weight percent to about 70 weight percent HFC-1234yf; about 15 weight percent to about 50 weight percent HFC-1234yf, about 20 weight percent to about 80 weight percent HFC-32 and about 5 weight percent to about 60 weight percent HFC-143a; about 10 weight percent to about 60 weight percent HFC-1234yf, about 20 weight percent to about 70 weight percent HFC-125 and about 20 weight percent to about 70 weight percent HFC-143a; or about 10 weight percent to about 80 weight percent HFC-1234yf, about 5 weight percent to about 80 weight percent HFC-32 and about 10 weight percent to about 80 weight percent HFC-125;
wherein the lubricant is selected from the group consisting of polyol esters and polyvinyl ethers.

4. The composition of claim 1, 2 or 3, comprising a lubricant, and
about 90 weight percent HFC-1234yf and about 10 weight percent HFC-134a; about 95 weight percent HFC-1234yf and about 5 weight percent HFC-32; about 80 weight percent HFC-1234yf and about 20 weight percent HFC-152a; about 40 weight percent HFC-32, about 50 weight percent HFC-125, and about 10 weight percent HFC-1234yf; about 23 weight percent HFC-32, about 25 weight percent HFC-125, and about 52 weight percent HFC-1234yf; about 15 weight percent HFC-32, about 45 weight percent HFC-125, and about 40 weight percent HFC-1234yf; or about 10 weight percent HFC-32, about 60 weight percent HFC-125, and about 30 weight percent HFC-1234yf;
wherein the lubricant is selected from the group consisting of polyol esters and polyvinyl ethers.

5. The composition of claim 1, comprising a lubricant, and
about 1 weight percent to about 57 weight percent HFC-1234yf and about 99 weight percent to about 43 weight percent HFC-32;about 1 weight percent to about 99 weight percent HFC-1234yf and about 99 weight percent to about 1 weight percent HFC-134a; about 1 weight percent to about 99 weight percent HFC-1234yf and about 99 weight percent to about 1 weight percent HFC-152a; about 1 weight percent to about 98 weight percent HFC-32, about 1 weight percent to about 98 weight percent HFC-125, and about 1 weight percent to about 55 weight percent HFC-1234yf; about 1 weight percent to about 50 weight percent HFC-1234yf, about 1 weight percent to about 98 weight percent HFC-32 and about 1 weight percent to about 98 weight percent HFC-143a; or about 1 weight percent to about 60 weight percent HFC-1234yf, about 1 weight percent to about 98 weight percent HFC-125 and about 1 weight percent to about 98 weight percent HFC-143a;
wherein the lubricant is selected from the group consisting of polyol esters and polyvinyl ethers.

6. The composition of claim 1, comprising a lubricant, and:
7.4 weight percent HFC-1234yf and 92.6 weight percent HFC-32; 70.4 weight percent HFC-1234yf and 29.6 weight percent HFC-134a; 91.0 weight percent HFC-1234yf and 9.0 weight percent HFC-152a; 3.9 weight percent HFC-1234yf, 74.3 weight percent HFC-32, and 21.8 weight percent HFC-143a; or 14.4 weight percent HFC-1234yf, 43.5 weight percent HFC-125 and 42.1 weight percent HFC-143a;
wherein the lubricant is selected from the group consisting of polyol esters and polyvinyl ethers.

7. The composition of any one of claims 1 to 6, wherein the lubricant has a kinematic viscosity of at least 5 centistokes at 40°C.

8. A method of producing cooling, the method comprising: evaporating the composition of any one of claims 1 to 7 in the vicinity of a body to be cooled and thereafter condensing the composition.

9. A method of producing heating, the method comprising: condensing the composition of any one of claims 1 to 7 in the vicinity of a body to be heated and thereafter evaporating the composition.

10. A method for replacing a high GWP refrigerant in a refrigeration, air-conditioning, or heat pump apparatus, wherein the high GWP refrigerant is selected from the group consisting of R134a, R22, R123, R11, R245fa, R114, R236fa, R124, R12, R410A, R407C, R417A, R422A, R507A, R502, and R404A, the method comprising providing the composition of any one of claims 1 to 7 to the refrigeration, air-conditioning, or heat pump apparatus that uses, used or is designed to use the high GWP refrigerant.

11. A refrigeration, air-conditioning, or heat pump apparatus containing the composition of any one of claims 1 to 7.

## Patentansprüche

1. Zusammensetzung, umfassend:
ein Schmiermittel, HFC-1234yf und HFC-134a; ein Schmiermittel, HFC-1234yf und HFC-152a; ein Schmiermittel, HFC-1234yf und HFC-32; ein Schmiermittel, HFC-1234yf, HFC-32 und HFC-125; ein Schmiermittel, HFC-1234yf, HFC-32 und HFC-143a; oder ein Schmiermittel, HFC-1234yf, HFC-125 und HFC-143a;
wobei das Schmiermittel ausgewählt ist aus der Gruppe bestehend aus Polyolestern und Polyvinylethern.

2. Zusammensetzung nach Anspruch 1, umfassend ein Schmiermittel, und
etwa 1 Gewichtsprozent bis etwa 99 Gewichtsprozent HFC-1234yf und etwa 99 Gewichtsprozent bis etwa 1 Gewichtsprozent HFC-134a; etwa 1 Gewichtsprozent bis etwa 99 Gewichtsprozent HFC-1234yf und etwa 99 Gewichtsprozent bis etwa 1 Gewichtsprozent HFC-32; etwa 1 Gewichtsprozent bis etwa 99 Gewichtsprozent HFC-1234yf und etwa 99 Gewichtsprozent bis etwa 1 Gewichtsprozent HFC-152a; etwa 0,1 Gewichtsprozent bis etwa 98 Gewichtsprozent HFC-32, etwa 0,1 Gewichtsprozent bis etwa 98 Gewichtsprozent HFC-125, und etwa 0,1 Gewichtsprozent bis etwa 98 Gewichtsprozent HFC-1234yf; etwa 1 Gewichtsprozent bis etwa 50 Gewichtsprozent HFC-1234yf, etwa 1 Gewichtsprozent bis etwa 98 Gewichtsprozent HFC-32 und etwa 1 Gewichtsprozent bis etwa 98 Gewichtsprozent HFC-143a; etwa 1 Gewichtsprozent bis etwa 60 Gewichtsprozent HFC-1234yf, etwa 1 Gewichtsprozent bis etwa 98 Gewichtsprozent HFC-125 und etwa 1 Gewichtsprozent bis etwa 98 Gewichtsprozent HFC-143a; oder etwa 1 Gewichtsprozent bis etwa 98 Gewichtsprozent HFC-1234yf, etwa 1 Gewichtsprozent bis etwa 98 Gewichtsprozent HFC-32 und etwa 1 Gewichtsprozent bis etwa 98 Gewichtsprozent HFC-125;
wobei das Schmiermittel ausgewählt ist aus der Gruppe bestehend aus Polyolestern und Polyvinylethern.

3. Zusammensetzung nach Anspruch 1 oder 2, umfassend ein Schmiermittel, und
etwa 30 Gewichtsprozent bis etwa 99 Gewichtsprozent HFC-1234yf und etwa 70 Gewichtsprozent bis etwa 1 Gewichtsprozent HFC-134a; etwa 40 Gewichtsprozent bis etwa 99 Gewichtsprozent HFC-1234yf und etwa 60 Gewichtsprozent bis etwa 1 Gewichtsprozent HFC-32; etwa 40 Gewichtsprozent bis etwa 99 Gewichtsprozent HFC-1234yf und etwa 60 Gewichtsprozent bis etwa 1 Gewichtsprozent HFC-152a; etwa 5 Gewichtsprozent bis etwa 70 Gewichtsprozent HFC-32, etwa 5 Gewichtsprozent bis etwa 70 Gewichtsprozent HFC-125, und etwa 5 Gewichtsprozent bis etwa 70 Gewichtsprozent HFC-1234yf; etwa 15 Gewichtsprozent bis etwa 50 Gewichtsprozent HFC-1234yf, etwa 20 Gewichtsprozent bis etwa 80 Gewichtsprozent HFC-32 und etwa 5 Gewichtsprozent bis etwa 60 Gewichtsprozent HFC-143a; etwa 10 Gewichtsprozent bis etwa 60 Gewichtsprozent HFC-1234yf, etwa 20 Gewichtsprozent bis etwa 70 Gewichtsprozent HFC-125 und etwa 20 Gewichtsprozent bis etwa 70 Gewichtsprozent HFC-143a; oder etwa 10 Gewichtsprozent bis etwa 80 Gewichtsprozent HFC-1234yf, etwa 5 Gewichtsprozent bis etwa 80 Gewichtsprozent HFC-32 und etwa 10 Gewichtsprozent bis etwa 80 Gewichtsprozent HFC-125;
wobei das Schmiermittel ausgewählt ist aus der Gruppe bestehend aus Polyolestern und Polyvinylethern.

4. Zusammensetzung nach Anspruch 1, 2, oder 3, umfassend ein Schmiermittel, und
etwa 90 Gewichtsprozent HFC-1234yf und etwa 10 Gewichtsprozent HFC-134a; etwa 95 Gewichtsprozent HFC-1234yf und etwa 5 Gewichtsprozent HFC-32; etwa 80 Gewichtsprozent HFC-1234yf und etwa 20 Gewichtsprozent HFC-152a; etwa 40 Gewichtsprozent HFC-32, etwa 50 Gewichtsprozent HFC-125, und etwa 10 Gewichtsprozent HFC-1234yf; etwa 23 Gewichtsprozent HFC-32, etwa 25 Gewichtsprozent HFC-125, und etwa 52 Gewichtsprozent HFC-1234yf; etwa 15 Gewichtsprozent HFC-32, etwa 45 Gewichtsprozent HFC-125, und etwa 40 Gewichtsprozent HFC-1234yf; oder etwa 10 Gewichtsprozent HFC-32, oder 60 Gewichtsprozent HFC-125, und etwa 30 Gewichtsprozent HFC-1234yf;
wobei das Schmiermittel ausgewählt ist aus der Gruppe bestehend aus Polyolestern und Polyvinylethern.

5. Zusammenfassung nach Anspruch 1, umfassend ein Schmiermittel, und
etwa 1 Gewichtsprozent bis etwa 57 Gewichtsprozent HFC-1234yf und etwa 99 Gewichtsprozent bis etwa 43 Gewichtsprozent HFC-32; etwa 1 Gewichtsprozent bis etwa 99 Gewichtsprozent HFC-1234yf und etwa 99 Gewichtsprozent bis etwa 1 Gewichtsprozent HFC-134a; etwa 1 Gewichtsprozent bis etwa 99 Gewichtsprozent HFC-1234yf und etwa 99 Gewichtsprozent bis etwa 1 Gewichtsprozent HFC-152a; etwa 1 Gewichtsprozent bis etwa 98 Gewichtsprozent HFC-32, etwa 1 Gewichtsprozent bis etwa 98 Gewichtsprozent HFC-125, und etwa 1 Gewichtsprozent bis etwa 55 Gewichtsprozent HFC-1234yf; etwa 1 Gewichtsprozent bis etwa 50 Gewichtsprozent HFC-1234yf, etwa 1 Gewichtsprozent bis etwa 98 Gewichtsprozent HFC-32 und etwa 1 Gewichtsprozent bis etwa 98 Gewichtsprozent HFC-143a; oder etwa 1 Gewichtsprozent bis etwa 60 Gewichtsprozent HFC-1234yf, etwa 1 Gewichtsprozent bis etwa 98 Gewichtsprozent HFC-125 und etwa 1 Gewichtsprozent bis etwa 98 Gewichtsprozent HFC-143a;
wobei das Schmiermittel ausgewählt ist aus der Gruppe bestehend aus Polyolestern und Polyvinylethern.

6. Zusammensetzung nach Anspruch 1, umfassend ein Schmiermittel, und
7,4 Gewichtsprozent HFC-1234yf und 92,6 Gewichtsprozent HFC-32; 70,4 Gewichtsprozent HFC-1234yf und 29,6 Gewichtsprozent HFC-134a; 91,0 Gewichtsprozent HFC-1234yf und 9,0 Gewichtsprozent HFC-152a; 3,9 Gewichtsprozent HFC-1234yf, 74,3 Gewichtsprozent HFC-32, und 21,8 Gewichtsprozent HFC-143a; oder 14,4 Gewichtsprozent HFC-1234yf, 43,5 Gewichtsprozent HFC-125 und 42,1 Gewichtsprozent HFC-143a;
wobei das Schmiermittel ausgewählt ist aus der Gruppe bestehend aus Polyolestern und Polyvinylethern.

7. Zusammensetzung nach einem der Ansprüche 1 bis 6, wobei das Schmiermittel eine kinematische Viskosität von mindestens 5 Centistokes bei 40°C.

8. Verfahren zum Erzeugen einer Kühlung, das Verfahren umfassend: Verdampfen einer Zusammensetzung nach einem der Ansprüche 1 bis 7 in der Nähe eines zu kühlenden Körpers und danach Kondensieren der Zusammensetzung.

9. Verfahren zum Erzeugen einer Erwärmung, das Verfahren umfassend: Kondensieren einer Zusammensetzung nach einem der Ansprüche 1 bis 7 in der Nähe eines zu erwärmenden Körpers und danach Verdampfen der Zusammensetzung.

10. Verfahren zum Ersetzen eines Kühlmittels mit hohem GWP in einer Kühl-, Klimaanlagen- oder Wärmepumpenvorrichtung, wobei das Kühlmittel mit hohem GWP aus der Gruppe, bestehend aus R134a, R22, R123, R11, R245fa, R114, R236fa, R124, R12, R410A, R407C, R417A, R422A, R507A, R502 und R404A, ausgewählt ist, wobei das Verfahren ein Bereitstellen der Zusammensetzung nach einem der Ansprüche 1 bis 7 an die Kühl-, Klimaanlagen- oder Wärmepumpenvorrichtung umfasst, die das Kühlmittel mit hohem GWP verwendet, verwendet hat oder darauf ausgelegt ist, es zu verwenden.

11. Kühl-, Klimaanlagen- oder Wärmepumpenvorrichtung, enthaltend eine Zusammensetzung nach einem der Ansprüche 1 bis 7.

## Revendications

1. Composition comprenant:
un lubrifiant, HFC-1234yf et HFC-134a; un lubrifiant, HFC-1234yf et HFC-152a; un lubrifiant, HFC-1234yf et HFC-32; un lubrifiant, HFC-1234yf, HFC-32 et HFC-125; un lubrifiant, HFC-1234yf, HFC-32 et HFC-143a; ou un lubrifiant, HFC-1234yf, HFC-125 et HFC-143a;
dans lequel le lubrifiant est choisi dans le groupe constitué des esters de polyol et des éthers de polyvinyle.

2. Composition selon la revendication 1, comprenant un lubrifiant, et
environ 1% en poids à environ 99% en poids de HFC-1234yf et environ 99% en poids à environ 1% en poids de HFC-134a; environ 1% en poids à environ 99% en poids de HFC-1234yf et environ 99% en poids à environ 1% en poids de HFC-32; environ 1% en poids à environ 99% en poids de HFC-1234yf et environ 99% en poids à environ 1% en poids de HFC-152a; environ 0,1% en poids à environ 98% en poids de HFC-32, environ 0,1% en poids à environ 98% en poids de HFC-125 et environ 0,1% en poids à environ 98% en poids de HFC-1234yf; environ 1% en poids à environ 50% en poids de HFC-1234yf, environ 1% en poids à environ 98% en poids de HFC-32 et environ 1% en poids à environ 98% en poids de HFC-143a; environ 1% en poids à environ 60% en poids de HFC-1234yf, environ 1% en poids à environ 98% en poids de HFC-125 et environ 1% en poids à environ 98% en poids de HFC-143a; ou environ 1% en poids à environ 98% en poids de HFC-1234yf, environ 1% en poids à environ 98% en poids de HFC-32 et environ 1% en poids à environ 98% en poids de HFC-125;
dans lequel le lubrifiant est choisi dans le groupe constitué des esters de polyol et des éthers de polyvinyle.

3. Composition selon la revendication 1 ou 2, comprenant un lubrifiant, et
environ 30% en poids à environ 99% en poids de HFC-1234yf et environ 70% en poids à environ 1% en poids de HFC-134a; environ 40% en poids à environ 99% en poids de HFC-1234yf et environ 60% en poids à environ 1% en poids de HFC-32; environ 40% en poids à environ 99% en poids de HFC-1234yf et environ 60% en poids à environ 1% en poids de HFC-152a; environ 5% en poids à environ 70% en poids de HFC-32, environ 5% en poids à environ 70% en poids de HFC-125 et environ 5% en poids à environ 70% en poids de HFC-1234yf; environ 15% en poids à environ 50% en poids de HFC-1234yf, environ 20% en poids à environ 80% en poids de HFC-32 et environ 5% en poids à environ 60% en poids de HFC-143a; environ 10% en poids à environ 60% en poids de HFC-1234yf, environ 20% en poids à environ 70% en poids de HFC-125 et environ 20% en poids à environ 70% en poids de HFC-143a; ou environ 10% en poids à environ 80% en poids de HFC-1234yf, environ 5% en poids à environ 80% en poids de HFC-32 et environ 10% en poids à environ 80% en poids de HFC-125;
dans lequel le lubrifiant est choisi dans le groupe constitué des esters de polyol et des éthers de polyvinyle.

4. Composition selon la revendication 1, 2 ou 3, comprenant un lubrifiant, et
environ 90% en poids de HFC-1234yf et environ 10% en poids de HFC-134a; environ 95% en poids de HFC-1234yf et environ 5% en poids de HFC-32; environ 80% en poids de HFC-1234yf et environ 20% en poids de HFC-152a; environ 40% en poids de HFC-32, environ 50% en poids de HFC-125 et environ 10% en poids de HFC-1234yf; environ 23% en poids de HFC-32, environ 25% en poids de HFC-125 et environ 52% en poids de HFC-1234yf; environ 15% en poids de HFC-32, environ 45% en poids de HFC-125 et environ 40% en poids de HFC-1234yf; ou environ 10% en poids de HFC-32, environ 60% en poids de HFC-125 et environ 30% en poids de HFC-1234yf;
dans lequel le lubrifiant est choisi dans le groupe constitué des esters de polyol et des éthers de polyvinyle.

5. Composition selon la revendication 1, comprenant un lubrifiant, et
environ 1% en poids à environ 57% en poids de HFC-1234yf et environ 99% en poids à environ 43% en poids de HFC-32; environ 1% en poids à environ 99% en poids de HFC-1234yf et environ 99% en poids à environ 1% en poids de HFC- 134a; environ 1% en poids à environ 99% en poids de HFC-1234yf et environ 99% en poids à environ 1% en poids de HFC-152a; environ 1% en poids à environ 98% en poids de HFC-32, environ 1% en poids à environ 98% en poids de HFC-125 et environ 1% en poids à environ 55% en poids de HFC-1234yf; environ 1% en poids à environ 50% en poids de HFC-1234yf, environ 1% en poids à environ 98% en poids de HFC-32 et environ 1% en poids à environ 98% en poids de HFC-143a; ou environ 1% en poids à environ 60% en poids de HFC-1234yf, environ 1% en poids à environ 98% en poids de HFC-125 et environ 1% en poids à environ 98% en poids de HFC-143a;
dans lequel le lubrifiant est choisi dans le groupe constitué des esters de polyol et des éthers de polyvinyle.

6. Composition selon la revendication 1, comprenant un lubrifiant, et
7,4% en poids de HFC-1234yf et 92,6% en poids de HFC-32; 70,4% en poids de HFC-1234yf et 29,6% en poids de HFC-134a; 91,0% en poids de HFC-1234yf et 9,0% en poids de HFC-152a; 3,9% en poids de HFC-1234yf, 74,3% en poids de HFC-32, et 21,8% en poids de HFC-143a; ou 14,4% en poids de HFC-1234yf, 43,5% en poids de HFC-125 et 42,1% en poids de HFC-143a;
dans lequel le lubrifiant est choisi dans le groupe constitué des esters de polyol et des éthers de polyvinyle.

7. Composition selon l'une quelconque des revendications 1 à 6, dans laquelle le lubrifiant présente une viscosité cinématique d'au moins 5 centistokes à 40°C.

8. Procédé pour produire un refroidissement, ledit procédé comprenant: l'évaporation d'une composition selon l'une quelconque des revendications 1 à 7 au voisinage d'un corps devant être refroidi et ensuite la condensation de ladite composition.

9. Procédé pour produire de la chaleur, ledit procédé comprenant : la condensation d'une composition selon l'une quelconque des revendications 1 à 7 au voisinage d'un corps devant être chauffé, et ensuite l'évaporation de ladite composition.

10. Procédé pour remplacer une substance réfrigérante à potentiel PRP élevé dans un appareil de réfrigération, de conditionnement d'air, ou de pompe à chaleur, dans lequel ladite substance réfrigérante à potentiel PRP élevé est choisie dans le groupe constitué par R134a, R22, R123, R11, R245fa, R114, R236fa, R124, R12, R410A, R407C, R417A, R422A, R507A, R502, et R404A, ledit procédé comprenant la fourniture de la composition selon l'une quelconque des revendications 1 à 7 audit appareil de réfrigération, de conditionnement d'air, ou de pompe à chaleur qui utilise, a utilisé ou est conçu pour utiliser ladite substance réfrigérante à potentiel PRP élevé.

11. Appareil de réfrigération, de conditionnement d'air, ou de pompe à chaleur contenant une composition selon l'une quelconque des revendications 1 à 7.
